# EUROPÄISCHE PATENTSCHRIFT

(11) **EP 0 756 696 B1**
(45) Veröffentlichungstag und Bekanntmachung des Hinweises auf die Patenterteilung: **14.01.1998**
(21) Anmeldenummer: 94912467.1
(22) Anmeldetag: 19.04.1994
(51) Int. Cl.: G01F 1/66

(54) **HALTERUNGSEINRICHTUNG FÜR ULTRASCHALLWANDLER**
HOLDER FOR ULTRASONIC TRANSDUCERS
DISPOSITIF DE RETENUE DE TRANSDUCTEURS ULTRASONIQUES

(43) Veröffentlichungstag der Anmeldung: 05.02.1997
(73) Patentinhaber: SIEMENS AKTIENGESELLSCHAFT, 80333 München (DE)
(72) Erfinder: LÖSCHBERGER, Jürgen, D-90765 Fürth (DE); SPENDEL, Karl, D-90455 Nürnberg (DE); SIEBENHAAR, Thomas, D-96257 Redwitz (DE); MÖCKL, Thomas, D-96450 Coburg (DE)
(86) Internationale Anmeldenummer: DE9400429
(87) Internationale Veröffentlichungsnummer: WO9528618

(56) Entgegenhaltungen:
- EP-A- 0 260 335
- WO-A-91/09279
- DE-A- 3 941 634
- FR-A- 2 150 630
- US-A- 4 011 473

## Beschreibung

Die Erfindung bezieht sich auf eine Halterungseinrichtung zur Halterung eines Ultraschallwandlers gemäß dem Oberbegriff von Anspruch 1.

Eine derartige Halterungseinrichtung ist aus der DE 39 41 634 bekannt. Hier wird für die schallisolierte, exakt positionierende Halterung eines Ultraschallwandlers in einem Durchflußmesser ein O-Ring verwendet, der sich zwischen nach dem Prinzip der Drei-Punkt-Halterung verteilt angeordneten linienhaften Berührungen befindet, von denen eine in Form einer Nut den Wandler haltert.

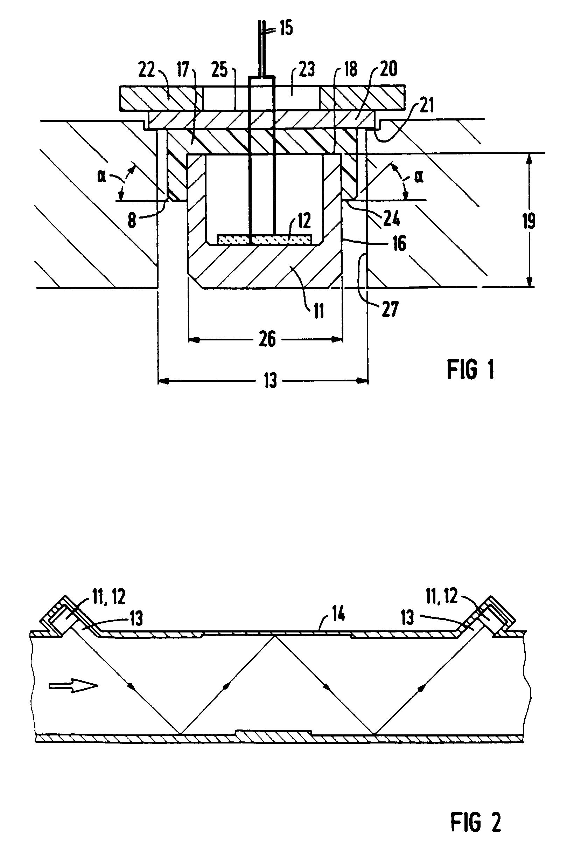

Nähere Einzelheiten der dabei verwendeten Durchflußmeßeinrichtung werden anhand der FIG 2 erläutert. Die hier dargestellte Durchflußmeßeinrichtung zur Messung der Strömungsgeschwindigkeit von Gasen und Flüssigkeiten besteht im wesentlichen aus einem Meßrohr, das den Strömungskanal für das hindurchströmende Medium bildet und rechteckigen Querschnitt aufweist. An einer der Seitenwände des Meßrohrs sind, in Strömungsrichtung versetzt, zwei Rohrstutzen schräg angeformt, in denen zwei Ultraschallwandler gehaltert sind.

Beide Ultraschallwandler werden wechselweise nacheinander als Sende- und Empfangswandler betrieben. Der jeweils als Sendewandler betriebene Ultraschallwandler sendet ein Ultraschallsignal in das Meßrohr aus, und der jeweilige Empfangswandler empfängt das vom Medium und der Geschwindigkeit des Mediums im Meßkanal modifizierte Signal nach Durchlaufen eines w-förmigen Ultraschallweges nach dreifacher Reflexion an den Innenwänden des Meßrohrs.

Ein spezielles Problem bei Ultraschall-Durchflußmeßeinrichtungen stellt der akustische Kurzschluß zwischen den Ultraschallwandlern dar. Das bedeutet, daß das Ultraschallsignal sich durch die Wand des Meßrohrs vom Sendewandler zum Empfangswandler ausbreitet und nicht vom Medium im Meßrohr beeinflußt wird. Wird dieses Signal vom Empfangswandler empfangen und von der angeschlossenen Elektronik ausgewertet, so ist keine Information über die Strömung enthalten. Falls sich dieses Signal mit dem "echten" Signal mischt, ist die Information über die Strömung stark gestört. Eine Lösung dieses Problems liegt in der Minimierung des Kurzschluß-Signals, indem der Kontakt zwischen Meßrohr und Wandler minimiert wird.

Ein weiteres Problem bei Ultraschall-Durchflußmeßeinrichtung besteht in der Abdichtung des Gasweges bzw. des Strömungskanales um die Ultraschallwandler herum. In manchen Konstruktionen ist es notwendig, daß ein direkter Kontakt zwischen Medium und Ultraschallwandler besteht, wie es die FIG 2 zeigt. Die Abdichtung der Wandler gegen das Meßrohr kann eine weitere Aufgabe der Wandlerhalterung sein.

Der Erfindung liegt die Aufgabe zugrunde, eine Halterungseinrichtung zur Halterung von Ultraschallwandlern in einem Meßrohr derart zu verbessern, daß die oben genannten Probleme vermieden oder zumindest auf ein nicht störendes Maß verringert werden. Dies wird erfindungsgemäß durch die Merkmale des kennzeichnenden Teils von Anspruch 1 erreicht.

Vorteilhafte Weiterbildungen der Erfindung sind den Unteransprüchen 2 bis 7 zu entnehmen.

Die erfindungsgemäße Halterungseinrichtung hat einen zur Abdichtung erforderlichen minimalen Kontakt mit dem Meßrohr. Der Kontakt der Halterung zum Ultraschallwandler findet über den Elastomer-Formkörper in einem akustisch ruhigen Gebiet statt. Auch die Form der Halterungseinrichtung ist so bestimmt, daß kein Kontakt zwischen der Zylinderwand des Meßrohrs und der Seitenwand des Elastomer-Formkörpers über den gesamten Temperaturbereich auftritt.

Eine erfindungsgemäße Ausführungsform der Halterungseinrichtung wird im folgenden anhand einer Zeichnung näher erläutert:
- FIG 1: Die Halterung eines Ultraschallwandlers in einem Wanddurchbruch eines Meßrohrs,
- FIG 2: die grundsätzliche Anordnung einer Durchflußmeßeinrichtung in bekannter Art.

FIG 1 zeigt die erfindungsgemäße Halterungseinrichtung zur Halterung eines als Topfwandler ausgebildeten Ultraschallwandlers 11,12 in einer Zylinderbohrung 13 eines Meßrohrs 14 oder eines an diesem angeformten Rohrstutzens, wie in FIG 2 dargestellt.

Der Ultraschallwandler besteht im wesentlichen aus einem zylindrischen Topfgehäuse 11 und einer Piezo-Keramikscheibe 12, die bodenseitig im Hohlraum des Topfgehäuses 11 liegt, sowie einem nach außen geführten, die Piezo-Keramikscheibe 12 kontaktierenden elektrischen Anschluß 15.

Die Mantelfläche 16 des Ultraschallwandlers 11,12 ist rückseitig, d.h. in dem in der FIG 1 oben liegenden Bereich, von einem zylindrisch geformten Elastomer-Formkörper 17 eng umhüllt, wobei sich dieser über den Topfrand 18 des Ultraschallwandlers hinaus erstreckt und die Mantelfläche 16 rückseitig nur bis zu einer Höhe im Bereich von 25 % - 60 % der gesamten Mantelhöhe 19 belegt. Der Elastomer-Formkörper 17 ist parallel und ebenmäßig in einem Abstand von mindestens 10 % der Mantelhöhe 19 zum Topfrand 18 abgeschlossen und hier mit einem Halteflansch 20 verbunden.

Der Halteflansch 20 weist gegenüber dem Durchmesser der Zylinderbohrung 13 ein Übermaß auf und ist auf einem Absatz 21 an der Außenseite der Zylinderbohrung 13 abgestützt. Auf der anderen Seite liegt auf dem Halteflansch 20 eine scheibenförmige Halteplatte 22 mit einer zentralen Bohrung 23 auf, deren Durchmesser zumindest nicht kleiner als der Außendurchmesser 26 des Topfgehäuses 11 sein sollte. Durch die zentrale Bohrung 23 ist der elektrische Anschluß 15 des Ultraschallwandlers 11,12 nach außen geführt.

Die der Ultraschall-Abstrahlrichtung zugewandte Seite, d.h. in FIG 1 nach unten gerichtete Fläche 24 des Elastomer-Formkörpers 17, ist am Außenrand abgerundet oder abgeschrägt in einem Winkel α = 45° ± 15°. Diese Abschrägung verhindert eine Ausbreitung einer möglichen Eigenschwingung der Ummantelung und damit die Übertragung dieser Schwingung an die Wand des Meßrohrs.

Der Durchmesser der Zylinderbohrung 13 des Meßrohrs 14 bzw. des Rohrstutzens gemäß FIG 2 am Meßrohr 14, in die der Ultraschallwandler 11,12 hineinragt, ist so groß, daß eine Berührung der Zylinderwand 27 durch den Elastomer-Formkörper 17 in jedem Betriebszustand, z.B. über den gesamten Betriebstemperaturbereich sicher vermieden wird.

Das Elastomer des Formkörpers 17 hat einen Glasübergangspunkt von kleiner oder gleich 0 °C und eine Shore Härte von 25 - 70. Außerdem ist das Elastomer danach ausgewählt, daß es im Betriebsfrequenzbereich der Ultraschallwandler 11,12 akustisch dämpfend wirkt.

## Patentansprüche

1. Halterungseinrichtung zur Halterung eines Ultraschallwandlers (11,12) mit einem Topfgehäuse (11), wobei der Topfrand (18) der Ultraschall-Abstrahlrichtung abgewandt ist
**dadurch gekennzeichnet,**
daß das Topfgehäuse (11) mit einem Elastomer-Formkörper (17) umhüllt ist, der sich ausgehend von dem Topfrand (18) über 25 % bis 60 % der äußeren Mantelfläche (16) des Topfgehäuses (11) erstreckt, wobei der übrige Teil der äußeren Mantelfläche (16) und der äußere Topfboden frei sind, und wobei der Elastomer-Formkörper (17) gleichzeitig zur Halterung dient.

2. Halterungseinrichtung nach Anspruch 1, **dadurch gekennzeichnet,** daß der Ultraschallwandler (11,12) an dem rückseitig über den Topfrand (18) sich hinaus erstreckenden Elastomer-Formkörper (17) mit einem Halteflansch (20) versehen ist, dessen Montagefläche (25) in einer Ebene liegt, die zum Topfrand (18) einen Abstand von 10 % bis 30 % der Mantelhöhe (19) aufweist.

3. Halterungseinrichtung nach Anspruch 1 oder 2, **dadurch gekennzeichnet,** daß mit dem Halteflansch (20) eine Halteplatte (22) verbunden ist, die einen kreisförmigen Durchbruch (23) mit einem Durchmesser aufweist, der nicht kleiner als der Außendurchmesser (26) ist.

4. Halterungseinrichtung nach einem der vorangehenden Ansprüche, **dadurch gekennzeichnet,** daß die der Ultraschall-Abstrahlrichtung zugewandte Fläche (24) des Elastomer-Formkörpers (17) am Außenrand abgerundet oder abgeschrägt ist.

5. Halterungseinrichtung nach Anspruch 4, **dadurch gekennzeichnet,** daß die Abschrägung der Fläche (24) des Elastomer-Formkörpers (17) einen Winkel im Bereich 45° ± 15° hat.

6. Halterungseinrichtung nach einem der vorangehenden Ansprüche, **dadurch gekennzeichnet,** daß der Ultraschallwandler (11,12) über seinen Halteflansch (20) in einem als Zylinderbohrung (13) ausgeführten Wand-Durchbruch eines Meßrohres (14) gehalten ist, wobei der Durchmesser der Zylinderbohrung (13) und die Breitenausdehnung des Ultraschallwandlers (11,12) mit dem Elastomer-Formkörper (17) als Hülle so aufeinander abgestimmt sind, daß der Elastomer-Formkörper (17) die Zylinderwand (27) der Zylinderbohrung (13) in keinem Betriebszustand berührt.

7. Halterungseinrichtung nach einem der vorangehenden Ansprüche, **dadurch gekennzeichnet,** daß das Elastomer des Formkörpers (17) einen Glasübergangspunkt von kleiner oder gleich 0 °C hat.

8. Halterungseinrichtung nach einem der vorangehenden Ansprüche, **dadurch gekennzeichnet,** daß das Elastomer eine Shore-Härte im Bereich 25 - 70 hat.

## Claims

1. A retaining device for the retention of an ultrasonic transducer (11, 12) with a cup-shaped housing (11), wherein the cup edge (18) faces away from the ultrasound emission direction, characterised in that the cup-shaped housing (11) is encased with an elastomer moulded body (17) which extends from the cup edge (18) over 25% to 60% of the outer sidewall surface (16) of the cup-shaped housing (11), the rest of the outer sidewall surface (16) and the outer cup base remaining exposed, and the elastomer moulded body (17) simultaneously serving as retaining means.

2. A retaining device according to Claim 1, characterised in that on the elastomer moulded body (17) which extends on the rear side beyond the cup edge (18), the ultrasonic transducer (11, 12) is provided with a retaining flange (20) whose mounting surface (25) is located in a plane which is spaced by a distance of 10% to 30% of the sidewall height (19) from the cup edge (18).

3. A retaining device according to Claim 1 or 2, characterised in that the retaining flange (20) is connected to a retaining plate (22) which has a circular opening (23) with a diameter which is no smaller than the outer diameter (26).

4. A retaining device according to one of the preceding claims, characterised in that the surface (24) of the elastomer moulded body (17) facing towards the ultrasound emission direction is rounded or bevelled at the outer edge.

5. A retaining device according to Claim 4, characterised in that the bevel of the surface (24) of the elastomer moulded body (17) has an angle in the range of 45° ± 15°.

6. A retaining device according to one of the preceding claims, characterised in that the ultrasonic transducer (11, 12) is retained via its retaining flange (20) in a wall opening of a measuring pipe (14) in the form of a cylindrical bore (13), the diameter of the cylindrical bore (13) and the breadth dimension of the ultrasonic transducer (11, 12), with the elastomer moulded body (17) as casing, being adapted to one another in such manner that the elastomer moulded body (17) does not contact the cylindrical wall (27) of the cylindrical bore (13) in any operating state.

7. A retaining device according to one of the preceding claims, characterised in that the elastomer of the moulded body (17) has a glass transition point of less than or equal to 0°C.

8. A retaining device according to one of the preceding claims, characterised in that the elastomer has a Shore hardness in the range of 25 - 70.

## Revendications

1. Dispositif de fixation d'un transducteur (11,12) à ultrasons comportant un boîtier (11) en forme de pot, le bord (18) de pot étant éloigné de la direction d'émission des ultrasons, caractérisé en ce que le boîtier (11) en forme de pot est entouré d'une pièce (17) moulée d'élastomère qui, à partir du bord (18) de pot, s'étend sur 25% à 60% de la surface (16) latérale extérieure du boîtier (11) de pot, la partie restante de la surface (16) latérale extérieure et le fond extérieur du pot étant dégagés, et la pièce (17) moulée élastomère servant en même temps de fixation.

2. Dispositif de fixation suivant la revendication 1, caractérisé en ce que le transducteur (11,12) à ultrasons est muni sur la pièce (17) moulée d'élastomère s'étendant à l'arrière au-delà du bord (18) de pot d'une bride (20) de fixation, dont la surface (25) de montage se trouve dans un plan qui est distant du bord (18) de pot d'une distance de 10% à 30% de la hauteur (19) latérale.

3. Dispositif de fixation suivant la revendication 1 ou 2, caractérisé en ce qu'il est relié à la bride (20) de fixation une plaque (22) de fixation qui comporte une ouverture (23) circulaire ayant un diamètre qui n'est pas plus petit que le diamètre (26) extérieur.

4. Dispositif de fixation suivant l'une des revendications précédentes, caractérisé en ce que la surface (24) de la pièce (17) moulée d'élastomère tournée vers la direction d'émission des ultrasons est arrondie ou biseautée sur le bord extérieur.

5. Dispositif de fixation suivant la revendication 4, caractérisé en ce que le biseautage de la surface (24) de la pièce (17) moulée d'élastomère à un angle compris dans l'intervalle 45° ± 15°.

6. Dispositif de fixation suivant l'une des revendications précédentes, caractérisé en ce que le transducteur (11,12) à ultrasons est maintenu par l'intermédiaire de sa bride (20) de fixation dans une ouverture de paroi d'un tube (14) de mesure réalisée en perçage (13) cylindrique, le diamètre de perçage (13) cylindrique et l'étendue en largeur du transducteur (11,12) à ultrasons comportant la pièce (17) moulée d'élastomère servant d'enveloppe étant adaptés de manière que la pièce (17) moulée d'élastomère ne touche pas la paroi (27) cylindrique du perçage (13) cylindrique en chaque état de fonctionnement.

7. Dispositif de fixation suivant l'une des revendications précédentes, caractérisé en ce que l'élastomère de la pièce (17) moulée a un point de transition vitreuse inférieur ou égal à 0° C.

8. Dispositif de fixation suivant l'une des revendications précédentes, caractérisé en ce que l'élastomère a une dureté Shore comprise entre 25 et 70.
